# EUROPÄISCHE PATENTANMELDUNG

(11) **EP 1 006 634 A1**
(43) Veröffentlichungstag der Anmeldung: **07.06.2000**
(21) Anmeldenummer: 99121920.5
(22) Anmeldetag: 05.11.1999
(51) Int. Cl.: H02G 3/04, F16L 3/26

(54) **Leitungsführungskanal**

(30) Priorität: 02.12.1998 DE 29821517 U
(71) Anmelder: Tehalit GmbH, D-67716 Heltersberg (DE)
(72) Erfinder: Schnurr, Richard, 66957 Vinningen (DE)
(74) Vertreter: Patentanwälte Möll und Bitterich

(57) **Zusammenfassung**

Gegenstand der Erfindung ist eine Vorrichtung zum lösbaren Befestigen eines Formstücks (1), welches Stöße und Schnittkanten überdeckt, auf einem Leitungsführungskanal. Zur Befestigung des Formstücks (1) dienen Flecke (10) eines selbstklebenden Klebstoffs, aufgebracht auf einer geeigneten Klebefläche (2). Der selbstklebende Klebstoff kann auf der freien Oberseite eines Klettverschlusses, bestehend aus Hakenband und Schlaufenband, aufgebracht und mit Schutzpapier abgedeckt sein.

## Beschreibung

Die Erfindung betrifft Leitungsführungskanäle gemäß dem Oberbegriff des Anspruchs 1.

Leitungsführungskanäle der hier relevanten Art umfassen im wesentlichen ein meist trogförmiges Unterteil, welches die Leitungen aufnimmt, und wenigstens einen auf das Unterteil lösbar aufsetzbaren Deckel. Während die Verlegung der Leitungsführungskanäle in gerader Linie unproblematisch ist, entstehen beim Verlegen um Ecken, d. h. Außenecken, Innenecken, Flachecken, sowie bei T- und kreuzförmigen Abzweigen unschöne Stöße und Schnittkanten. Aus diesem Grunde gibt es zu allen Leitungsführungskanälen passende Formstücke in Form von Innenecken, Außenecken, Flachwinkeln, Endplatten sowie T- und Kreuzstücken.

Für eine nachträgliche Installation von Leitungen müssen die Formstücke ebenso wie die Deckel jederzeit wieder lösbar sein. Die Befestigung der Formstücke erfolgt daher mittels Steck-, Rast- oder Schnappverschlüssen.

In der Praxis hat sich jedoch herausgestellt, daß das Anbringen der Formstücke oft umständlich und zeitraubend ist. Auch sitzen die Formstücke oft nicht ausreichend fest. Werden sie angestoßen, beispielsweise mit einem Staubsauger, verlieren sie ihren Halt und fallen auf den Boden. Dieser Zustand ist unbefriedigend.

Der vorliegenden Erfindung liegt daher die Aufgabe zugrunde, einen Leitungsführungskanal anzugeben, dessen Formstücke schnell montiert sind, fest sitzen und trotzdem jederzeit wieder abgenommen und wieder angebracht werden können.

Diese Aufgabe wird gelöst durch einen Leitungsführungskanal mit den Merkmalen des Anspruchs 1.

Die vorliegende Erfindung greift auf die seit langem bekannten selbstklebenden Klebstoffe zurück und setzt sie zur Befestigung der Formstücke jetzt auch im Bereich der Leitungsführungskanäle ein. Die Stärke der Verbindung ist bekannt, sie kann durch Vergrößern oder Verkleinern der Klebefläche problemlos an die jeweiligen Bedürfnisse angepaßt werden.

Gemäß einer Weiterbildung der Erfindung ist der selbstklebende Klebstoff Bestandteil eines doppelseitig klebenden Klebebandes. Derartige Klebebänder werden in anderen Bereichen der Technik seit langem in großem Umfang eingesetzt. Überraschenderweise hat sich jetzt erst herausgestellt, dass sie auch zur Befestigung von Formteilen an Leitungsführungskanälen bestens geeignet sind.

Gemäß einer vorteilhaften Weiterbildung der Erfindung befindet sich der selbstklebende Klebstoff auf der freiliegenden Oberseite eines Klettverschlusses, bestehend aus Hakenband und Schlaufenband bzw. aus zwei Hakenbändern. Auch Klettverschlüsse werden in vielen Bereichen der Technik in großem Umfang seit langem verwendet, ohne dass ihre Eignung zur lösbaren Befestigung von Formstücken auf Leitungsführungskanälen bisher erkannt und genutzt worden wäre. Klettverschlüsse lassen sich beliebig oft öffnen und wieder schließen. Ihre Haftkraft ist bekannt und kann durch Variation der Größe in weiten Grenzen eingestellt werden. Aufgrund ihrer Struktur sind Klettverschlüsse auch elastisch nachgiebig und können daher Toleranzen problemlos ausgleichen.

Vorzugsweise ist der Klettverschluss an der Klebefläche des Formteils angeklebt. Dies kann bereits werksseitig geschehen, wodurch die Arbeit des Elektroinstallateurs vereinfacht und beschleunigt wird.

Vorzugsweise ist die Klebstoffschicht mit einem abziehbaren Schutzpapier abgedeckt.

Anhand der Zeichnung soll die Erfindung in Form eines Ausführungsbeispiels näher erläutert werden. Es zeigen
- Fig. 1: in perspektivischer Darstellung ein als Außeneck ausgebildetes Formstück und
- Fig. 2: rein schematisch den Schichtaufbau des Klettverschlusses.

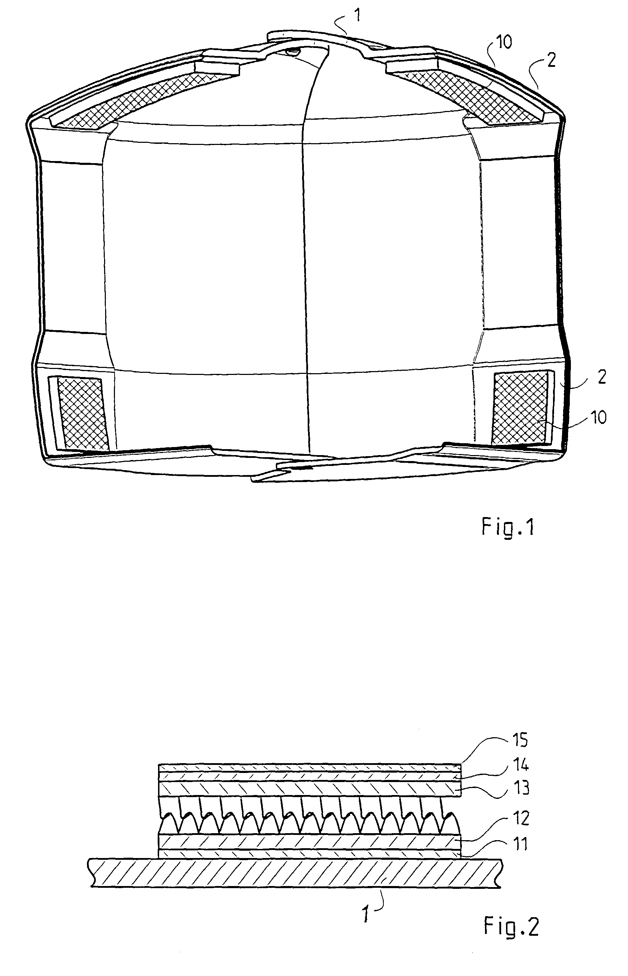

Fig. 1 zeigt rein schematisch und in perspektivischer Darstellung die Innenseite eines Außenecks 1 als Beispiel für Formstücke, wie sie in großer Zahl bei Leitungsführungskanälen verwendet werden. An geeigneten Klebeflächen 2 des Formstücks ist je ein Fleck 10 eines selbstklebenden Klebstoffs aufgebracht. Während Lagerung und Transport ist der Klebstofffleck 10 mit einem Schutzpapier abgedeckt. Nach Abziehen des Schutzpapiers kann das Formstück 1 auf den Leitungsführungskanal (nicht dargestellt) aufgedrückt werden, worauf die Klebstoffflecken 10 die jederzeit wieder lösbare Verbindung herstellen.

Anstelle eines einfachen Klebstoffflecks 10 kann auch ein Stück eines doppelseitigen Klebebandes verwendet werden.

Erheblich günstigere Eigenschaften erhält man, wenn zwischen Formstück 1 und Klebstofffleck ein Klettverschluss vorgesehen ist. Fig. 2 zeigt rein schematisch den Schichtaufbau einer solchen Klettverschluss-Klebstoff-Kombination. Der Klettverschluss wird gebildet durch ein Hakenband 13 und ein damit korrespondierendes Schlaufenband 12. Das oben liegende Hakenband 13 trägt auf seiner Rückseite einen selbstklebenden Klebstofffleck 14, der mit einem Schutzpapier 15 abgedeckt ist Das Schlaufenband 12 ist mit einem Kleber 11 auf dem Formstück 1 befestigt. Der Kleber 11 muss nicht selbstklebend sein.

Soll das Formstück 1 an einem Leitungsführungskanal befestigt werden, so wird zunächst das Schutzpapier 15 abgezogen. Anschließend wird das Formstück 1 auf den Kanal aufgedrückt, wobei die Klebschicht 14 für eine feste Verbindung sorgt. Muß das Formstück 1 eines Tages wieder abgenommen werden, so erfolgt die Trennung im Bereich von Schlaufenband 11 und Hakenband 13.

## Patentansprüche

1. Leitungsführungskanal, im wesentlichen umfassend
- ein Unterteil, welches die Leitungen aufnimmt,
- einen auf das Unterteil lösbar aufsetzbaren Deckel
- und wenigstens ein Formstück (1),
-- welches am Leitungsführungskanal befestigbar ist
-- und Stöße und Schnittkanten überdeckt, gekennzeichnet durch das Merkmal:
- zur Befestigung des Formstücks (1) dient wenigstens ein Fleck (10,14) eines selbstklebenden Klebstoffs, aufgebracht auf einer geeigneten Klebefläche (2).

2. Leitungsführungskanal nach Anspruch 1, gekennzeichnet durch das Merkmal:
- der selbstklebende Klebstoff ist Bestandteil eines doppelseitig klebenden Klebebandes.

3. Leitungsführungskanal nach Anspruch 1, gekennzeichnet durch das Merkmal:
- eine Schicht (14) des selbstklebenden Klebstoffs befindet sich auf der freiliegenden Oberseite eines Klettverschlusses, bestehend aus Hakenband (13) und Schlaufenband (12) oder aus zwei Hakenbändern (13).

4. Leitungsführungskanal nach Anspruch 3, gekennzeichnet durch das Merkmal:
- der Klettverschluss (12,13) ist an der Klebefläche (2) des Formstücks 1 angeklebt.

5. Leitungsführungskanal nach einem der Ansprüche 1 bis 4, gekennzeichnet durch das Merkmal:
- die Klebstoffschicht (14) bzw. der Klebstofffleck (10) ist mit Schutzpapier (15) abgedeckt.
